# EUROPÄISCHE PATENTSCHRIFT

(11) **EP 3 090 869 B1**
(45) Veröffentlichungstag und Bekanntmachung des Hinweises auf die Patenterteilung: **01.04.2020**
(21) Anmeldenummer: 16165601.2
(22) Anmeldetag: 15.04.2016
(51) Int. Cl.: B30B 11/08, B30B 15/00

(54) **ROTOR FÜR EINE RUNDLÄUFERPRESSE**
ROTOR FOR A ROTARY PRESS
ROTOR POUR UNE PRESSE ROTATIVE

(30) Priorität: 17.04.2015 DE 102015105936
(43) Veröffentlichungstag der Anmeldung: 09.11.2016
(73) Patentinhaber: Fette Compacting GmbH, 21493 Schwarzenbek (DE)
(72) Erfinder: Lüdemann, Stefan, 21035 Hamburg (DE)
(74) Vertreter: Hauck Patentanwaltspartnerschaft mbB

(56) Entgegenhaltungen:
- JP-A- H06 297 199
- JP-U- H0 480 690
- JP-U- H01 153 895
- JP-U- S61 107 498
- JP-U- S61 182 699

## Beschreibung

Die Erfindung betrifft einen Rotor für eine Rundläuferpresse, umfassend eine Matrizenscheibe mit Matrizenbohrungen und mit der Matrizenscheibe synchron umlaufende, den Matrizenbohrungen paarweise zugeordnete Oberstempel und Unterstempel, weiter umfassend eine Oberstempelaufnahme, in der die Oberstempel axial geführt sind sowie eine Unterstempelaufnahme, in der die Unterstempel axial geführt sind, und umfassend eine obere Steuerkurve, die die axiale Bewegung der die obere Steuerkurve durchlaufenden Oberstempel steuert, sowie eine untere Steuerkurve, die die axiale Bewegung der die untere Steuerkurve durchlaufenden Unterstempel steuert. Die Erfindung betrifft außerdem eine Rundläuferpresse.

Die Ober- und Unterstempel der Rotoren von Rundläuferpressen müssen mit einem geeigneten Schmiermittel, beispielsweise einem Schmieröl, geschmiert werden. Dies erfolgt in der Regel über ein mit dem zu schmierenden Bereich der Ober- bzw. Unterstempel in Kontakt stehendes Kontaktteil. Das Kontaktteil kann zum Beispiel aus einem Filz bestehen, der von dem Schmiermittel durchtränkt ist. Es ist bekannt, das für die Schmierung genutzte Kontaktteil im Bereich eines Steuerkurvenabschnitts der oberen bzw. unteren Steuerkurve des Rotors anzuordnen. Für eine effektive Schmierung ist die Position des Kontaktteils in Bezug auf die das Kontaktteil durchlaufenden Ober- bzw. Unterstempel entscheidend. Diese Position zu den Ober- bzw. Unterstempeln wird insbesondere definiert über die Geometrie der eingesetzten Bauteile. Zu nennen sind hier zum Beispiel die Geometrie des Kontaktteils, des das Kontaktteil haltenden Kontaktteilhalters, des Abschnitts der Steuerkurve, des Steuerkurventrägers, des Rotors und der Ober- bzw. Unterstempel. Es ist auch bekannt, die Position des Kontaktteils vor der ersten Inbetriebnahme manuell einzustellen, so dass nach der ersten Montage eine definierte Position des Kontaktteils vorliegt. Hiermit ist ein nicht unerheblicher Aufwand verbunden.

Im Betrieb kommt es darüber hinaus zu einem Verschleiß des Kontaktteils. Dadurch wird der Kontakt zwischen dem Kontaktteil und den durchlaufenden Ober- bzw. Unterstempeln zunehmend schlechter. Der Schmiermittelübertrag auf die Ober- und Unterstempel funktioniert entsprechend ebenfalls nur noch unzureichend. Im Extremfall kann es vorkommen, dass zwischen dem Kontaktteil und den Ober- bzw. Unterstempeln überhaupt kein Kontakt mehr besteht und die Schmierfunktion entsprechend gar nicht mehr gewährleistet ist. Durch Toleranzen der eingesetzten Bauteile kann darüber hinaus der Anpressdruck des Kontaktteils an die Ober- bzw. Unterstempel auch unabhängig von dem Verschleiß stark variieren. Dies führt ebenfalls zu einer schlechten Schmierfunktion. Der Anpressdruck kann sowohl zu klein als auch zu groß sein. Ein zu geringer Anpressdruck führt zu einer schlechten Schmiermittelübertragung auf die Ober- bzw. Unterstempel. Ein zu hoher Anpressdruck führt zu starkem Verschleiß des Kontaktteils oder kann sogar Beschädigungen des Kontaktteils verursachen. Auch kommt es in der Praxis bei hohem Druck teilweise zu einem Lösen des Kontaktteils aus seiner Halterung.

Dokument JP H06 297 199 offenbart einen Rotor gemäss dem Oberbegriff des Anspruchs 1.

Ausgehend von dem erläuterten Stand der Technik liegt der Erfindung die Aufgabe zugrunde, einen Rotor und eine Rundläuferpresse der eingangs genannten Art bereitzustellen, bei denen jederzeit eine möglichst konstante Schmiermittelübertragung auf die Ober- bzw. Unterstempel vorliegt. Ein übermäßiger Verschleiß oder eine Beschädigung der an der Schmierung beteiligten Bauteile soll vermieden werden, ebenso wie Folgeschäden aufgrund zu geringer Schmierung.

Die Erfindung löst die Aufgabe durch den Gegenstand der unabhängigen Ansprüche 1 und 11. Vorteilhafte Ausgestaltungen finden sich in den abhängigen Ansprüchen, der Beschreibung und den Figuren.

Für einen Rotor der eingangs genannten Art löst die Erfindung die Aufgabe dadurch, dass mindestens ein Abschnitt der oberen Steuerkurve mindestens ein die durchlaufenden Oberstempel kontaktierendes und Schmiermittel auf die Oberstempel aufbringendes oberes Kontaktteil aufweist, wobei mindestens ein oberes Nachstellelement vorgesehen ist, welches die Position des mindestens einen oberen Kontaktteils bei einer Veränderung des Abstands zu den durchlaufenden Oberstempeln derart nachstellt, dass das mindestens eine obere Kontaktteil jederzeit mit im Wesentlichen derselben Anpresskraft an die durchlaufenden Oberstempel gepresst wird, und/oder dass mindestens ein Abschnitt der unteren Steuerkurve mindestens ein die durchlaufenden Unterstempel kontaktierendes und Schmiermittel auf die Unterstempel aufbringendes unteres Kontaktteil aufweist, wobei mindestens ein unteres Nachstellelement vorgesehen ist, welches die Position des mindestens einen unteren Kontaktteils bei einer Veränderung des Abstands zu den durchlaufenden Unterstempeln derart nachstellt, dass das mindestens eine untere Kontaktteil jederzeit mit im Wesentlichen derselben Anpresskraft an die durchlaufenden Unterstempel gepresst wird.

Der grundsätzliche Aufbau einer Rundläuferpresse beispielsweise zur Tablettenherstellung ist bekannt und soll daher nicht im Detail erläutert werden. Die Ober- und Unterstempel des Rotors der Rundläuferpresse sind in Oberstempelaufnahmen bzw. Unterstempelaufnahmen in axialer Richtung geführt. Die axiale Bewegung der Ober- bzw. Unterstempel wird durch obere und untere Steuerkurven gesteuert. Die oberen und unteren Steuerkurven sind in der Regel aus mehreren Steuerkurvenelementen aufgebaut, die an einem oberen bzw. unteren Steuerkurventräger befestigt sind. Sie bilden eine Aufnahme, in der die Ober- bzw. Unterstempel mit ihren Stempelköpfen gehalten sind. Die Aufnahme bildet eine Endloskurvenbahn, der die Ober- bzw. Unterstempel im Zuge ihres Umlaufs mit dem Rotor folgen und so in axialer Richtung gesteuert bewegt werden. Insbesondere werden die Ober- und Unterstempel für den Füll- und Dosiervorgang, den Pressvorgang und den Auswerfvorgang geeignet axial bewegt. Dies ist ebenfalls an sich bekannt.

Wie eingangs erläutert ist es erforderlich, die Ober- und Unterstempel zu schmieren. Zum Einsatz können beispielsweise Schmieröle, Schmierfette oder auch Festschmiermittel kommen. Insbesondere ist eine Schmierung der in den oberen bzw. unteren Stempelaufnahmen axial geführten Stempelschäfte der Ober- bzw. Unterstempel erforderlich. Auch die in den Steuerkurven geführten Stempelköpfe müssen in der Regel geschmiert werden. Für die Schmierung der Ober- und Unterstempel wird mindestens ein Abschnitt der oberen und/oder unteren Steuerkurve genutzt, wobei die Ober- und/oder Unterstempel im Zuge ihres Durchlaufens dieses Abschnitts mit einem oberen und/oder unteren Kontaktteil in Berührung kommen, welches im Zuge dieses Kontakts das Schmiermittel auf den kontaktierten Bereich der Ober- und/oder Unterstempel aufbringt.

Erfindungsgemäß sind ein oberes Nachstellelement und/oder ein unteres Nachstellelement vorgesehen, welche die Position des mindestens einen oberen und/oder unteren Kontaktteils bei einer Veränderung des Abstands des oberen und/oder unteren Kontaktteils zu den den jeweiligen für die Schmierung benutzten Steuerkurvenabschnitt durchlaufenden Ober- und/oder Unterstempeln derart nachstellt, dass das mindestens eine obere und/oder untere Kontaktteil jederzeit mit im Wesentlichen derselben Anpresskraft an die durchlaufenden Ober- und/oder Unterstempel gepresst wird. Insbesondere sorgt das erfindungsgemäße obere bzw. untere Nachstellelement dabei für einen im Wesentlichen jederzeit konstanten Abstand zwischen dem oberen bzw. unteren Kontaktteil und den an dem Kontaktteil vorbeilaufenden Ober- bzw. Unterstempeln. Die Nachstellung des erfindungsgemäßen oberen bzw. unteren Nachstellelements erfolgt dabei insbesondere automatisch. In der Regel wird das Nachstellen des oberen bzw. unteren Kontaktteils dabei in Richtung der durchlaufenden Ober- bzw. Unterstempel erfolgen, insbesondere wenn beispielsweise ein Verschleiß des oberen bzw. unteren Kontaktteils zu einem vergrößerten Abstand zu den Ober- bzw. Unterstempeln geführt hat. Es ist aber auch ein Nachstellen von den Ober- bzw. Unterstempeln weg möglich, beispielsweise bei entsprechenden Bauteiltoleranzen.

Erfindungsgemäß erfolgt somit eine Positionierung der Kontaktteile über die Ausrichtung an den Ober- bzw. Unterstempeln. Die Position der Kontaktteile ist folglich nicht allein durch die eingesetzten Bauteile und gegebenenfalls durch die erstmalige Einstellung während der Erstmontage definiert. Vielmehr ist die Kontaktteilhalterung durch das obere bzw. untere Nachstellelement derart ausgeführt, dass die Position des oberen bzw. unteren Kontaktteils automatisch in geeigneter Weise nachgestellt wird.

Die Erfindung erzielt eine Reihe von Vorteilen. Insbesondere führt sie zu einer konstanten Schmiermittelübertragung auf die Ober- bzw. Unterstempel durch gleichbleibenden Anpressdruck des Kontaktteils. Dies wiederum führt zu einem geringeren Verschleiß der Ober- bzw. Unterstempel, da jederzeit eine ausreichende Schmierung gewährleistet ist. Dadurch kommt es auch zu einem geringeren Verschleiß der Steuerkurven und weiterer Elemente der Rundläuferpresse, beispielsweise der Druckrollen von Pressstationen. Beschädigungen der Ober- bzw. Unterstempel durch mangelhaften Kontakt mit dem die Schmierung bereitstellenden Kontaktteil werden vermieden. Dies betrifft insbesondere sogenannte Stempelfresser oder Beschädigungen der Oberfläche der Stempelwerkzeuge. Folgeschäden, die durch Schäden der Ober- und Unterstempel entstehen können, werden ebenfalls vermieden. Zu nennen wären beispielsweise Folgeschäden an den Steuerkurven, den Druckrollen, an Anbauteilen am Rotor, der Rotorwelle oder dem Antrieb des Rotors. Die erforderliche Schmiermittelmenge ist für die Bedienperson besser einzustellen, da eine konstante Schmiermittelübertragung erfolgt. Damit wird auch ein effizienterer Einsatz des Schmiermittels erreicht. Es kommt zu weniger Schmiermittelüberschuss. Überschüssiges Schmiermittel ist besonders kritisch, da es zu Verunreinigungen der hergestellten Presslinge führen kann. Die Handhabung der an der Schmierung beteiligten Bauteile ist vereinfacht und weniger fehleranfällig. Eine aufwendige manuelle Einstellung durch eine Bedienperson ist nicht erforderlich. Dies gilt grundsätzlich auch für die Erstmontage. Falscheinstellungen werden sicher vermieden. Darüber hinaus ergeben sich längere Wartungsintervalle für das Kontaktteil.

Es kann bevorzugt sein, dass ein oberes und ein unteres erfindungsgemäßes Kontaktteil und Nachstellelement vorgesehen sind. Auf diese Weise kommen die Vorteile der erfindungsgemäßen Schmierung sowohl bei den Oberstempeln als auch den Unterstempeln zur Geltung. Es ist aber auch möglich, dass die erfindungsgemäße Schmierung nur bei den Oberstempeln oder nur bei den Unterstempeln zum Einsatz kommt, mithin nur ein oberes erfindungsgemäßes Kontaktteil und Nachstellelement oder nur ein unteres erfindungsgemäßes Kontaktteil und Nachstellelement vorgesehen sind.

Das mindestens eine obere Kontaktteil kann die Stempelschäfte der Oberstempel kontaktieren. Entsprechend kann das mindestens eine untere Kontaktteil die Stempelschäfte der Unterstempel kontaktieren. Wie bereits erläutert, müssen insbesondere die Stempelschäfte der Ober- bzw. Unterstempel ausreichend geschmiert werden. Dazu kontaktieren die Kontaktteile bei dieser Ausgestaltung die Stempelschäfte.

Es ist auch möglich, dass das mindestens eine obere Kontaktteil die Stempelköpfe der Oberstempel kontaktiert, insbesondere die Spiegelflächen der Stempelköpfe und/oder die Zylinderflächen der Stempelköpfe und/oder Übergangsbereiche zwischen den Zylinderflächen und den Stempelschäften der Oberstempel und/oder dass das mindestens eine untere Kontaktteil die Stempelköpfe der Unterstempel kontaktiert, insbesondere die Spiegelflächen der Stempelköpfe und/oder die Zylinderflächen der Stempelköpfe und/oder Übergangsbereiche zwischen den Zylinderflächen und den Stempelschäften der Unterstempel. Wie ebenfalls eingangs erläutert, müssen oftmals auch zumindest Bereiche der Stempelköpfe der Ober- bzw. Unterstempel geschmiert werden. Dazu kontaktieren die Kontaktteile bei dieser Ausgestaltung die entsprechenden Bereiche der Stempelköpfe. Als Spiegelfläche bezeichnet man bei den hier in Rede stehenden Pressstempeln die dem in die Bohrungen der Matrizenscheibe eintauchenden Pressbereich abgewandte flache Oberseite der Stempelköpfe. Die Spiegelfläche kann eben sein. Sie kann in Draufsicht kreisförmig ausgebildet sein. Sie kann auch einen gekrümmten Übergangsbereich umfassen, der einen Übergang in die sich anschließende Zylinderfläche des jeweiligen Stempelkopfes bildet. Darüber hinaus besteht bei den Stempelköpfen in der Regel ein konisch ausgebildeter oder gekrümmter Übergangsbereich zwischen der Zylinderfläche und dem jeweiligen Stempelschaft. Abhängig von dem Anwendungsfall kann es sinnvoll sein, einige oder sämtliche Bereiche des Stempelkopfes zu schmieren.

Nach einer weiteren Ausgestaltung kann vorgesehen sein, dass mindestens ein Abschnitt der oberen Steuerkurve mehrere die durchlaufenden Oberstempel in unterschiedlichen Bereichen kontaktierende und Schmiermittel auf die unterschiedlichen Bereiche der Oberstempel aufbringende obere Kontaktteile aufweist und/oder dass mindestens ein Abschnitt der unteren Steuerkurve mehrere die durchlaufenden Unterstempel in unterschiedlichen Bereichen kontaktierende und Schmiermittel auf die unterschiedlichen Bereiche der Unterstempel aufbringende untere Kontaktteile aufweist. Durch mehrere Kontaktteile können gleichzeitig zum Beispiel die Stempelschäfte und bestimmte Bereiche der Stempelköpfe kontaktiert und geschmiert werden, wie grundsätzlich bei den vorgenannten Ausgestaltungen erläutert. Es kann dann für jedes obere Kontaktteil ein oberes Nachstellelement vorgesehen sein, welches die Position des mindestens einen oberen Kontaktteils bei einer Veränderung des Abstands zu den durchlaufenden Oberstempeln derart nachstellt, dass das mindestens eine obere Kontaktteil jederzeit mit im Wesentlichen derselben Anpresskraft an die durchlaufenden Oberstempel gepresst wird. Entsprechend kann dann für jedes untere Kontaktteil ein unteres Nachstellelement vorgesehen sein, welches die Position des mindestens einen unteren Kontaktteils bei einer Veränderung des Abstands zu den durchlaufenden Unterstempeln derart nachstellt, dass das mindestens eine untere Kontaktteil jederzeit mit im Wesentlichen derselben Anpresskraft an die durchlaufenden Unterstempel gepresst wird.

Das mindestens eine obere Nachstellelement kann durch mindestens ein auf das mindestens eine obere Kontaktteil wirkendes oberes Federelement gebildet sein. Entsprechend kann das mindestens eine untere Nachstellelement durch mindestens ein auf das mindestens eine untere Kontaktteil wirkendes unteres Federelement gebildet sein. Das Federelement kann zum Beispiel eine Spiralfeder umfassen. Das Federelement kann beispielsweise aus Metall, insbesondere Stahl, bestehen. Die Position des jeweiligen Kontaktteils bzw. eines das Kontaktteil jeweils haltenden Kontaktteilhalters richtet sich bei dieser Ausgestaltung in besonders einfacher Weise an den durchlaufenden Ober- bzw. Unterstempeln aus. Bei einer federnden Kontaktteilhalterung bilden die zu schmierenden Ober- bzw. Unterstempel einen Anschlag, gegen den das jeweilige Federelement, beispielsweise eine Metallfeder, drückt. Aufgrund der kleinen Federwege ist bei dieser Ausgestaltung die über die Federkennlinie definierte Anpresskraft des Kontaktteils auf die durchlaufenden Ober- bzw. Unterstempel nahezu konstant. Das jeweilige Federelement kann entsprechend eine flache Federkennlinie aufweisen, wobei die Federkennlinie bei den geringen Federwegen ohnehin quasi konstant ist. Die Toleranzen der eingesetzten Bauteile oder der Verschleiß des jeweiligen Kontaktteils haben somit keinen Einfluss auf die Funktion der Schmiermittelübertragung. Eine Einstellung der Position des Kontaktteils entfällt ebenfalls.

Es ist weiterhin möglich, dass das mindestens eine obere Kontaktteil und das mindestens eine obere Nachstellelement derart ausgebildet sind, insbesondere derart dimensioniert sind, dass im Betrieb des Rotors jederzeit mindestens ein Oberstempel von dem oberen Kontaktteil kontaktiert wird, und/oder dass das mindestens eine untere Kontaktteil und das mindestens eine untere Nachstellelement derart ausgebildet sind, insbesondere derart dimensioniert sind, dass im Betrieb des Rotors jederzeit mindestens ein Unterstempel von dem unteren Kontaktteil kontaktiert wird. Durch diese Ausgestaltung wird ein Aufschwingen des oberen bzw. unteren Kontaktteils bzw. Kontaktteilhalters sicher vermieden und die jederzeit gleiche Anpresskraft des Kontaktteils auf die Ober- bzw. Unterstempel wird besonders zuverlässig sichergestellt.

Nach einer weiteren Ausgestaltung kann vorgesehen sein, dass das mindestens eine obere Nachstellelement mindestens einen auf das mindestens eine obere Kontaktteil wirkenden oberen Nachstellantrieb umfasst und/oder dass das mindestens eine untere Nachstellelement mindestens einen auf das mindestens eine untere Kontaktteil wirkenden unteren Nachstellantrieb umfasst.

Weiterhin kann der mindestens eine obere Nachstellantrieb mindestens ein oberer Pneumatikantrieb, insbesondere Pneumatikzylinderantrieb, sein. Entsprechend kann der mindestens eine untere Nachstellantrieb mindestens ein unterer Pneumatikantrieb, insbesondere Pneumatikzylinderantrieb, sein.

Alternativ ist es möglich, dass der mindestens eine obere Nachstellantrieb mindestens ein elektrischer oberer Nachstellantrieb ist und/oder dass der mindestens eine untere Nachstellantrieb mindestens ein elektrischer unterer Nachstellantrieb ist.

Bei den vorgenannten Ausgestaltungen wird die konstante Anpresskraft des Kontaktteils durch ein aktives Element definiert, nämlich den Nachstellantrieb. Es ist dann weiterhin eine geeignete Steuereinrichtung vorgesehen, die den Nachstellantrieb in geeigneter Weise ansteuert, so dass die Anpresskraft des jeweiligen Kontaktteils auf die durchlaufenden Ober- bzw. Unterstempel im Wesentlichen konstant ist. Es können weiterhin Messeinrichtungen vorgesehen sein, die den Abstand und/oder die Anpresskraft des Kontaktteils zu bzw. auf die durchlaufenden Ober- bzw. Unterstempel messen. Die Messergebnisse können dann der Steuereinrichtung zugeführt werden, die gegebenenfalls den jeweiligen Nachstellantrieb geeignet ansteuert. Neben den genannten Nachstellantrieben wären natürlich auch anderer Antriebe denkbar. Lediglich beispielhaft genannt seien Hydraulikantriebe, insbesondere Hydraulikzylinderantriebe.

Nach einer weiteren Ausgestaltung können das mindestens eine obere Kontaktteil und/oder das mindestens eine untere Kontaktteil (jeweils) mindestens einen mit Schmiermittel durchtränkten Kontaktabschnitt umfassen, beispielsweise aus Filz oder einem ähnlichen saugfähigen Material.

Die Erfindung betrifft außerdem eine Rundläuferpresse umfassend einen erfindungsgemäßen Rotor, einen Antrieb zum drehenden Antreiben des Rotors sowie mindestens eine Füllstation mit mindestens einer Fülleinrichtung zum Befüllen der Bohrungen mit zu verpressendem Material, mindestens eine der Füllstation in Drehrichtung des Rotors nachgeordnete Pressstation mit mindestens einer Presseinrichtung, die die Ober- und/oder Unterstempel beim Durchlaufen der Pressstation in die Bohrungen drückt, um das in die Bohrungen gefüllte Material zu verpressen, und mindestens eine der Pressstation in Drehrichtung des Rotors nachgeordnete Auswerferstation mit einer Auswerfereinrichtung zum Auswerfen der in den Bohrungen gepressten Tabletten.

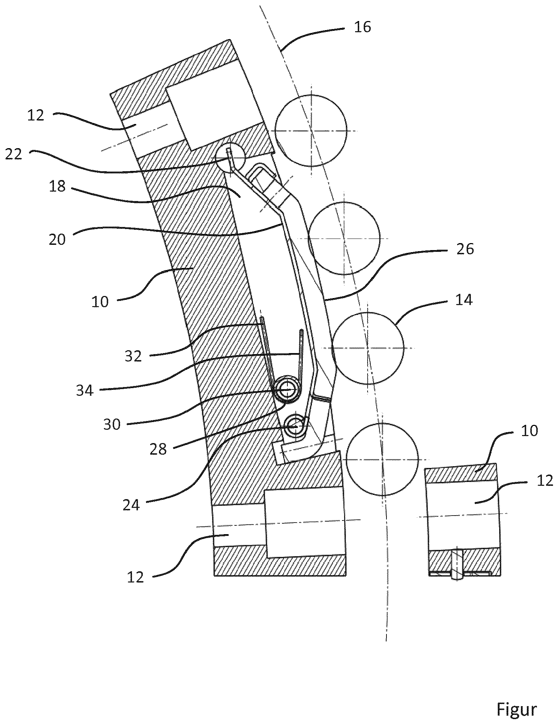

Ein Ausführungsbeispiel der Erfindung wird nachfolgend anhand einer Figur näher erläutert. Die einzige Figur zeigt schematisch und ausschnittsweise einen horizontalen Schnitt durch einen Abschnitt einer Steuerkurve eines erfindungsgemäßen Rotors einer Rundläuferpresse.

Der in der Figur gezeigte Rotor umfasst eine in der Schnittansicht nicht dargestellte Matrizenscheibe mit Matrizenbohrungen und mit der Matrizenscheibe synchron umlaufende, den Matrizenbohrungen paarweise zugeordnete Oberstempel und Unterstempel, von denen nur die Oberstempel bei dem Bezugszeichen 14 gezeigt sind. Weiter umfasst der Rotor eine nicht gezeigte Oberstempelaufnahme, in der die Oberstempel 14 axial geführt sind sowie eine ebenfalls nicht gezeigte Unterstempelaufnahme, in der die Unterstempel axial geführt sind. Auch umfasst der Rotor eine obere Steuerkurve, die die axiale Bewegung der die obere Steuerkurve durchlaufenden Oberstempel 14 steuert, sowie eine nicht gezeigte untere Steuerkurve, die die axiale Bewegung der die untere Steuerkurve durchlaufenden Unterstempel steuert. Der Rotor ist Teil einer Rundläuferpresse, die weiterhin einen Antrieb zum drehenden Antreiben des Rotors sowie mindestens eine Füllstation mit mindestens einer Fülleinrichtung zum Befüllen der Bohrungen mit zu verpressendem Material, mindestens eine der Füllstation in Drehrichtung des Rotors nachgeordnete Pressstation mit mindestens einer Presseinrichtung, die die Ober- und/oder Unterstempel beim Durchlaufen der Pressstation in die Bohrungen drückt, um das in die Bohrungen gefüllte Material zu verpressen, und mindestens eine der Pressstation in Drehrichtung des Rotors nachgeordnete Auswerferstation mit einer Auswerfereinrichtung zum Auswerfen der in den Bohrungen gepressten Tabletten umfasst. Dieser grundsätzliche Aufbau eines Rotors bzw. einer Rundläuferpresse ist an sich bekannt und soll daher nicht näher erläutert werden.

In der Figur ist ein horizontaler Schnitt durch einen Abschnitt 10 der oberen Steuerkurve des erfindungsgemäßen Rotors gezeigt. Obgleich im Folgenden die Erfindung anhand einer oberen Steuerkurve zur Schmierung der Oberstempel der Rundläuferpresse erläutert wird, ist selbstverständlich, dass eine entsprechende Ausgestaltung an der unteren Steuerkurve zur Schmierung der Unterstempel vorgesehen sein kann, die insoweit insbesondere identisch ausgebildet sein kann.

Darüber hinaus wird nachfolgend die Erfindung anhand einer Schmierung der Stempelschäfte der Oberstempel erläutert. Wiederum ist klar, dass in gleicher Weise auch eine Schmierung der Stempelköpfe der Ober- bzw. Unterstempel erfolgen kann.

Der in der Figur gezeigte Abschnitt 10 der oberen Steuerkurve wird über nur äußerst schematisch dargestellte Verbindungsmittel 12 an dem oberen Kurventräger des Rotors befestigt. Bei dem Bezugszeichen 14 sind in der Figur die entlang eines Teilkreises 16 durch die obere Steuerkurve geführten Oberstempel zu erkennen. Der Abschnitt 10 der oberen Steuerkurve besitzt in seinem den durchlaufenden Oberstempeln 14 zugewandten Bereich eine Ausnehmung 18. In der Ausnehmung 18 ist ein beispielsweise aus einem Metallwerkstoff bestehender Kontaktteilhalter 20 mit seinen gegenüberliegenden Enden 22 und 24 befestigt. Der Kontaktteilhalter 20 trägt ein mit einem Schmiermittel, beispielsweise einem Schmieröl, durchtränktes oberes Kontaktteil 26. Das Kontaktteil 26 besteht aus einem saugfähigen, verformbaren Material, wie beispielsweise Filz, und ist den Stempelschäften der entlang des Teilkreises 16 an dem Kontaktteil 26 vorbeilaufenden Oberstempeln 14 zugewandt. Dadurch werden die Stempelschäfte der Oberstempel 14 durch das obere Kontaktteil 26 mit Schmiermittel versorgt.

Bei dem Bezugszeichen 28 ist eine spiralförmig um einen in der Ausnehmung 18 fest angeordneten zylindrischen Vorsprung 30 gewickelte Metallfeder 28 angeordnet, deren eines freie Ende 32 an der den Oberstempeln 14 abgewandten Bodenseite der Ausnehmung 18 anliegt und deren anderes freies Ende 34 unter Vorspannung an der dem oberen Kontaktteil 26 abgewandten Innenseite der Kontaktteilhalterung 20 anliegt. Die Metallfeder 28 bildet ein erfindungsgemäßes Nachstellelement. Die Metallfeder 28 übt einen Anpressdruck auf die Kontaktteilhalterung 20 auf, die wiederum dazu führt, dass das obere Kontaktteil 26 auch bei auftretenden Bauteiltoleranzen oder einem Verschleiß des oberen Kontaktteils 26 jederzeit mit im Wesentlichen konstanter Anpresskraft an die durchlaufenden Oberstempel 14 gepresst wird. Es ist somit jederzeit und unabhängig von Verschließ oder Bauteiltoleranzen eine konstante und zuverlässige Versorgung der Oberstempel 14 mit Schmiermittel gewährleistet.

Alternativ zu dem passiven Nachstellelement in Form der Metallfeder 28 wäre natürlich auch ein aktives Nachstellelement umfassend einen Nachstellantrieb, beispielsweise einen elektrischen oder pneumatischen Nachstellantrieb, möglich.

## Patentansprüche

1. Rotor für eine Rundläuferpresse, umfassend eine Matrizenscheibe mit Matrizenbohrungen und mit der Matrizenscheibe synchron umlaufende, den Matrizenbohrungen paarweise zugeordnete Oberstempel (14) und Unterstempel, weiter umfassend eine Oberstempelaufnahme, in der die Oberstempel (14) axial geführt sind sowie eine Unterstempelaufnahme, in der die Unterstempel axial geführt sind, und umfassend eine obere Steuerkurve, die die axiale Bewegung der die obere Steuerkurve durchlaufenden Oberstempel (14) steuert, sowie eine untere Steuerkurve, die die axiale Bewegung der die untere Steuerkurve durchlaufenden Unterstempel steuert, wobei mindestens ein Abschnitt (10) der oberen Steuerkurve mindestens ein die durchlaufenden Oberstempel (14) kontaktierendes und Schmiermittel auf die Oberstempel (14) aufbringendes oberes Kontaktteil (26) aufweist, und/oder mindestens ein Abschnitt (10) der unteren Steuerkurve mindestens ein die durchlaufenden Unterstempel kontaktierendes und Schmiermittel auf die Unterstempel aufbringendes unteres Kontaktteil aufweist,
**dadurch gekennzeichnet, dass**
mindestens ein oberes Nachstellelement vorgesehen ist, welches die Position des mindestens einen oberen Kontaktteils (26) bei einer Veränderung des Abstands zu den durchlaufenden Oberstempeln (14) derart nachstellt, dass das mindestens eine obere Kontaktteil (26) jederzeit mit im Wesentlichen derselben Anpresskraft an die durchlaufenden Oberstempel (14) gepresst wird, und/oder dass mindestens ein unteres Nachstellelement vorgesehen ist, welches die Position des mindestens einen unteren Kontaktteils bei einer Veränderung des Abstands zu den durchlaufenden Unterstempeln derart nachstellt, dass das mindestens eine untere Kontaktteil jederzeit mit im Wesentlichen derselben Anpresskraft an die durchlaufenden Unterstempel gepresst wird.

2. Rotor nach Anspruch 1, **dadurch gekennzeichnet, dass** das mindestens eine obere Kontaktteil (26) die Stempelschäfte der Oberstempel (14) kontaktiert und/oder dass das mindestens eine untere Kontaktteil die Stempelschäfte der Unterstempel kontaktiert.

3. Rotor nach einem der vorhergehenden Ansprüche, **dadurch gekennzeichnet, dass** das mindestens eine obere Kontaktteil (26) die Stempelköpfe der Oberstempel (14) kontaktiert, insbesondere die Spiegelflächen der Stempelköpfe und/oder die Zylinderflächen der Stempelköpfe und/oder Übergangsbereiche zwischen den Zylinderflächen und den Stempelschäften der Oberstempel (14) und/oder dass das mindestens eine untere Kontaktteil die Stempelköpfe der Unterstempel kontaktiert, insbesondere die Spiegelflächen der Stempelköpfe und/oder die Zylinderflächen der Stempelköpfe und/oder Übergangsbereiche zwischen den Zylinderflächen und den Stempelschäften der Unterstempel.

4. Rotor nach einem der vorhergehenden Ansprüche, **dadurch gekennzeichnet, dass** mindestens ein Abschnitt (10) der oberen Steuerkurve mehrere die durchlaufenden Oberstempel (14) in unterschiedlichen Bereichen kontaktierende und Schmiermittel auf die unterschiedlichen Bereiche der Oberstempel (14) aufbringende obere Kontaktteile (26) aufweist und/oder dass mindestens ein Abschnitt (10) der unteren Steuerkurve mehrere die durchlaufenden Unterstempel in unterschiedlichen Bereichen kontaktierende und Schmiermittel auf die unterschiedlichen Bereiche der Unterstempel aufbringende untere Kontaktteile aufweist.

5. Rotor nach einem der vorhergehenden Ansprüche, **dadurch gekennzeichnet, dass** das mindestens eine obere Nachstellelement durch mindestens ein auf das mindestens eine obere Kontaktteil (26) wirkendes oberes Federelement (28) gebildet ist und/oder dass das mindestens eine untere Nachstellelement durch mindestens ein auf das mindestens eine untere Kontaktteil wirkendes unteres Federelement gebildet ist.

6. Rotor nach einem der vorhergehenden Ansprüche, **dadurch gekennzeichnet, dass** das mindestens eine obere Kontaktteil (26) und das mindestens eine obere Nachstellelement derart ausgebildet sind, dass im Betrieb des Rotors jederzeit mindestens ein Oberstempel (14) von dem oberen Kontaktteil (26) kontaktiert wird, und/oder dass das mindestens eine untere Kontaktteil und das mindestens eine untere Nachstellelement derart ausgebildet sind, dass im Betrieb des Rotors jederzeit mindestens ein Unterstempel von dem unteren Kontaktteil kontaktiert wird.

7. Rotor nach einem der vorhergehenden Ansprüche, **dadurch gekennzeichnet, dass** das mindestens eine obere Nachstellelement mindestens einen auf das mindestens eine obere Kontaktteil (26) wirkenden oberen Nachstellantrieb umfasst und/oder dass das mindestens eine untere Nachstellelement mindestens einen auf das mindestens eine untere Kontaktteil wirkenden unteren Nachstellantrieb umfasst.

8. Rotor nach Anspruch 7, **dadurch gekennzeichnet, dass** der mindestens eine obere Nachstellantrieb mindestens ein oberer Pneumatikantrieb, insbesondere Pneumatikzylinderantrieb, ist und/oder dass der mindestens eine untere Nachstellantrieb mindestens ein unterer Pneumatikantrieb, insbesondere Pneumatikzylinderantrieb, ist.

9. Rotor nach Anspruch 7, **dadurch gekennzeichnet, dass** der mindestens eine obere Nachstellantrieb mindestens ein elektrischer oberer Nachstellantrieb ist und/oder dass der mindestens eine untere Nachstellantrieb mindestens ein elektrischer unterer Nachstellantrieb ist.

10. Rotor nach einem der vorhergehenden Ansprüche, **dadurch gekennzeichnet, dass** das mindestens eine obere Kontaktteil (26) und/oder das mindestens eine untere Kontaktteil mindestens einen mit Schmiermittel durchtränkten Kontaktabschnitt umfasst.

11. Rundläuferpresse, umfassend einen Rotor nach einem der vorhergehenden Ansprüche, einen Antrieb zum drehenden Antreiben des Rotors sowie mindestens eine Füllstation mit mindestens einer Fülleinrichtung zum Befüllen der Bohrungen mit zu verpressendem Material, mindestens eine der Füllstation in Drehrichtung des Rotors nachgeordnete Pressstation mit mindestens einer Presseinrichtung, die die Ober- und/oder Unterstempel beim Durchlaufen der Pressstation in die Bohrungen drückt, um das in die Bohrungen gefüllte Material zu verpressen, und mindestens eine der Pressstation in Drehrichtung des Rotors nachgeordnete Auswerferstation mit einer Auswerfereinrichtung zum Auswerfen der in den Bohrungen gepressten Tabletten.

## Claims

1. A rotor for a rotary press, comprising a die plate having die bores and upper punches (14) and lower punches assigned in pairs to the die bores and circulating synchronously with the die plate, further comprising an upper punch receiver, in which the upper punches (14) are axially guided as well as a lower punch receiver, in which the lower punches are axially guided, and comprising an upper control cam which controls the axial movement of the upper punches (14) passing through the upper control cam, as well as a lower control cam which controls the axial movement of the lower punches passing through the lower control cam, wherein at least a portion (10) of the upper control cam has at least one upper contact part (26) in contact with the upper punches (14) passing through and applying lubricant to the upper punches (14), and/or at least a portion (10) of the lower control cam has at least one lower contact part in contact with the lower punches passing through and applying lubricant to the lower punches, **characterized in that** at least one upper adjusting element is provided, which adjusts the position of the at least one upper contact part (26) when the distance from the upper punches (14) passing through is altered in such a way that the at least one upper contact part (26) is always pressed with substantially the same clamping force onto the upper punches (14) passing through, and/or at least one lower adjusting element is provided, which adjusts the position of the at least one lower contact part when the distance from the lower punches passing through is altered in such a way that the at least one lower contact part is always pressed with substantially the same clamping force onto the lower punches passing through.

2. The rotor according to Claim 1, **characterized in that** the at least one upper contact part (26) is in contact with the punch shafts of the upper punches (14), and/or the at least one lower contact part is in contact with the punch shafts of the lower punches.

3. The rotor according to any one of the preceding claims, **characterized in that** the at least one upper contact part (26) is in contact with the punch heads of the upper punches (14), in particular the mirror faces of the punch heads and/or the cylinder faces of the punch heads and/or transition regions between the cylinder faces and the punch shafts of the upper punches (14), and/or the at least one lower contact part is in contact with the punch heads of the lower punches, in particular the mirror faces of the punch heads and/or the cylinder faces of the punch heads and/or transition regions between the cylinder faces and the punch shafts of the lower punches.

4. The rotor according to any one of the preceding claims, **characterized in that** at least a portion (10) of the upper control cam has a plurality of upper contact parts (26) in contact with the upper punches (14) passing through in different regions and applying lubricant to the different regions of the upper punches (14), and/or at least a portion (10) of the lower control cam has a plurality of lower contact parts in contact with the lower punches passing through in different regions and applying lubricant to the different regions of the lower punches.

5. The rotor according to any one of the preceding claims, **characterized in that** the at least one upper adjusting element is formed by at least one upper spring element (28) acting on the at least one upper contact part (26), and/or the at least one lower adjusting element is formed by at least one lower spring element acting on the at least one lower contact part.

6. The rotor according to any one of the preceding claims, **characterized in that** the at least one upper contact part (26) and the at least one upper adjusting element are configured in such a way that during the operation of the rotor at least one upper punch (14) is always contacted by the upper contact part (26), and/or the at least one lower contact part and the at least one lower adjusting element are configured in such a way that during the operation of the rotor at least one lower punch is always contacted by the lower contact part.

7. The rotor according to any one of the preceding claims, **characterized in that** the at least one upper adjusting element comprises at least one upper adjusting drive acting on the at least one upper contact part (26), and/or the at least one lower adjusting element comprises at least one lower adjusting drive acting on the at least one lower contact part.

8. The rotor according to Claim 7, **characterized in that** the at least one upper adjusting drive is at least one upper pneumatic drive, in particular a pneumatic cylinder drive, and/or the at least one lower adjusting drive is at least one lower pneumatic drive, in particular a pneumatic cylinder drive.

9. The rotor according to Claim 7, **characterized in that** the at least one upper adjusting drive is at least one electrical upper adjusting drive, and/or the at least one lower adjusting drive is at least one electrical lower adjusting drive.

10. The rotor according to any one of the preceding claims, **characterized in that** the at least one upper contact part (26) and/or the at least one lower contact part comprise(s) at least one contact portion soaked in lubricant.

11. A rotary press, comprising a rotor according to any one of the preceding claims, a drive for rotationally driving the rotor as well as at least one filling station having at least one filling apparatus for filling the bores with material to be compressed, at least one pressing station located downstream of the filling station in a rotational direction of the rotor and having at least one pressing apparatus which presses the upper and/or lower punches into the bores when passing through the pressing station, in order to compress the material filled into the bores, and at least one ejection station located downstream of the pressing station in a rotational direction of the rotor and having an ejection apparatus for ejecting the tablets pressed into the bores.

## Revendications

1. Rotor pour une presse rotative, comportant un disque à matrice avec des alésages de matrice et avec des poinçons supérieurs (14) et des poinçons inférieurs tournant de façon synchrone avec le disque à matrice, attribués par paires aux alésages de matrice, comportant en outre un logement de poinçons supérieurs dans lequel les poinçons supérieurs (14) sont guidés axialement, ainsi qu'un logement de poinçons inférieurs dans lequel les poinçons inférieurs sont guidés axialement, et comportant une courbe de commande supérieure commandant le déplacement axial des poinçons supérieurs (14) parcourant la courbe de commande supérieure , ainsi qu'une courbe de commande inférieure commandant le déplacement axial des poinçons inférieurs parcourant la courbe de commande inférieure,
dans lequel au moins une section (10) de la courbe de commande supérieure présente au moins une pièce de contact supérieure (26) venant en contact avec les poinçons supérieurs (14) en déplacement et appliquant un lubrifiant sur les poinçons supérieurs (14), et/ou au moins une section (10) de la courbe de commande inférieure présente au moins une pièce de contact inférieure venant en contact avec les poinçons inférieurs en déplacement et appliquant un lubrifiant sur les poinçons inférieurs,
**caractérisé en ce qu'**il est prévu au moins un élément d'ajustement supérieur ajustant la position de l'au moins une pièce de contact supérieure (26) lors d'une modification de la distance par rapport aux poinçons supérieurs (14) en déplacement, de telle façon que l'au moins une pièce de contact supérieure (26) est à tout moment pressée contre les poinçons supérieurs (14) en déplacement avec une force de pression essentiellement constante, et/ou **en ce qu'**il est prévu au moins un élément d'ajustement inférieur ajustant la position de l'au moins une pièce de contact inférieure lors d'une modification de la distance par rapport aux poinçons inférieurs en déplacement, de telle façon que l'au moins une pièce de contact inférieure est à tout moment pressée contre les poinçons inférieurs en déplacement avec une force de pression essentiellement constante.

2. Rotor selon la revendication 1, **caractérisé en ce que** l'au moins une pièce de contact supérieure (26) vient en contact avec les tiges de poinçon des poinçons supérieurs (14) et/ou **en ce que** l'au moins une pièce de contact inférieure vient en contact avec les tiges de poinçon des poinçons inférieurs.

3. Rotor selon l'une des revendications précédentes, **caractérisé en ce que** l'au moins une pièce de contact supérieure (26) vient en contact avec les têtes de poinçon des poinçons supérieurs (14), en particulier les surfaces spéculaires des têtes de poinçon et/ou les surfaces cylindriques des têtes de poinçon et/ou les régions de transition entre les surfaces cylindriques et les tiges de poinçon des poinçons supérieurs (14), et/ou **en ce que** l'au moins une pièce de contact inférieure vient en contact avec les têtes de poinçon des poinçons inférieurs, en particulier les surfaces spéculaires des têtes de poinçon et/ou les surfaces cylindriques des têtes de poinçon et/ou des régions de transition entre les surfaces cylindriques et les tiges de poinçon des poinçons inférieurs.

4. Rotor selon l'une des revendications précédentes, **caractérisé en ce qu'**au moins une section (10) de la courbe de commande supérieure présente plusieurs pièces de contact supérieures (26) venant en contact avec les poinçons supérieurs (14) en déplacement dans différentes régions et appliquant un lubrifiant sur les différentes régions des poinçons supérieurs (14), et/ou **en ce qu'**au moins une section (10) de la courbe de commande inférieure présente plusieurs pièces de contact inférieures venant en contact avec les poinçons inférieurs en déplacement dans différentes régions et appliquant un lubrifiant sur les différentes régions des poinçons inférieurs.

5. Rotor selon l'une des revendications précédentes, **caractérisé en ce que** l'au moins un élément d'ajustement supérieur est formé par au moins un élément de ressort supérieur (28) agissant sur l'au moins une pièce de contact supérieure (26) et/ou **en ce que** l'au moins un élément d'ajustement inférieur est formé par au moins un élément de ressort inférieur agissant sur l'au moins une pièce de contact inférieure.

6. Rotor selon l'une des revendications précédentes, **caractérisé en ce que** l'au moins une pièce de contact supérieure (26) et l'au moins un élément d'ajustement supérieur sont conçus de telle façon qu'au moins un poinçon supérieur (14) est en contact à tout moment avec la pièce de contact supérieure (26) pendant le fonctionnement du rotor, et/ou **en ce que** l'au moins une pièce de contact inférieure et l'au moins un élément d'ajustement inférieur sont conçus de telle façon qu'au moins un poinçon inférieur est en contact à tout moment avec la pièce de contact inférieure pendant le fonctionnement du rotor.

7. Rotor selon l'une des revendications précédentes, **caractérisé en ce que** l'au moins un élément d'ajustement supérieur comporte au moins un entraînement d'ajustement supérieur agissant sur l'au moins une pièce de contact supérieure (26) et/ou **en ce que** l'au moins un élément d'ajustement inférieur comporte au moins un entraînement d'ajustement inférieur agissant sur l'au moins une pièce de contact inférieure.

8. Rotor selon la revendication 7, **caractérisé en ce que** l' au moins un entraînement d'ajustement supérieur est au moins un entraînement pneumatique supérieur, en particulier un entraînement à vérin pneumatique, et/ou **en ce que** l'au moins un entraînement d'ajustement inférieur est au moins un entraînement pneumatique inférieur, en particulier un entraînement à vérin pneumatique.

9. Rotor selon la revendication 7, **caractérisé en ce que** l'au moins un entraînement d'ajustement supérieur est au moins un entraînement d'ajustement supérieur électrique et/ou **en ce que** l'au moins un entraînement d'ajustement inférieur est au moins un entraînement d'ajustement inférieur électrique.

10. Rotor selon l'une des revendications précédentes, **caractérisé en ce que** l'au moins une pièce de contact supérieure (26) et/ou l'au moins une pièce de contact inférieure comporte/comportent au moins une section de contact imprégnée de lubrifiant.

11. Presse rotative, comportant un rotor selon l'une des revendications précédentes, un entraînement destiné à entraîner le rotor de façon rotative ainsi qu'au moins une station de remplissage avec au moins un dispositif de remplissage destiné à remplir les alésages avec un matériau à comprimer, au moins une station de pressage installée en aval de la station de remplissage dans la direction de rotation du rotor, avec au moins un dispositif de pressage poussant les poinçons supérieurs et/ou inférieurs dans les alésages pendant le passage à travers la station de pressage pour comprimer le matériau rempli dans les alésages, et au moins une station d'éjection installée en aval de la station de pressage dans la direction de rotation du rotor, avec un dispositif d'éjection destiné à éjecter les tablettes pressées dans les alésages.
